# EUROPEAN PATENT APPLICATION

(11) **EP 2 034 789 A1**
(43) Date of publication of application: **11.03.2009**
(21) Application number: 08015724.1
(22) Date of filing: 05.09.2008
(51) Int. Cl.: H04W 68/00, H04W 60/04

(54) **Method for introducing paging reception into queuing operation for a wirelsess communications system and related apparatus**

(30) Priority: 05.09.2007 US 969956 P
(71) Applicant: Innovative Sonic Limited, Tortola (VG)
(72) Inventor: Kuo, Richard-Lee-Chee, Peitou, Taipei City (TW)
(74) Representative: Weber, Joachim

(57) **Abstract**

A method for introducing paging reception into a queuing operation for a user equipment of a wireless communications system includes performing activating operations corresponding to the paging reception when entering a paging state corresponding to radio resource control and a waiting state of the queuing operation according to a cell update procedure (402).

## Description

This application claims the benefit of U.S. Provisional Application No. 60/969,956, filed on SEP 05, 2007 and entitled "Method and Apparatus for Improving Paging Reception during UE Waiting in a Wireless Communication System".

The present invention relates to a method and related apparatus for providing paging reception during a queuing operation in a wireless communications system according to the pre-characterizing clauses of claims 1 and 7.

The third generation (3G) mobile communications system has adopted a Wideband Code Division Multiple Access (WCDMA) wireless air interface access method for a cellular network. WCDMA can provide high frequency spectrum utilization, universal coverage, and high quality, high speed multimedia data transmission. The WCDMA method also meets all kinds of QoS requirements simultaneously, providing diverse flexible two-way transmission services and better communication quality to reduce transmission interruption rates.

For the universal mobile telecommunications system (UMTS), the 3G communications system comprises User Equipment (UE), the UMTS Terrestrial Radio Access Network (UTRAN), and the Core Network (CN). Communications protocols utilized include Access Stratum (AS) and Non-Access Stratum (NAS). AS comprises various sub-layers for different functions, including Radio Resource Control (RRC), Radio Link Control (RLC), Media Access Control (MAC), Packet Data Convergence Protocol (PDCP), and Broadcast/Multicast Control (BMC). The sub-layers mentioned, and their operating principles, are well known in the art, and detailed description thereof is omitted.

RRC is a Layer 3 communications protocol, and is the core of the AS communications protocol. All radio resource information exchange, radio resource configuration control, QoS control, channel transmission format configuration control, packet segmentation/concatenation processing and control, and NAS protocol transmission processing is performed by the RRC layer. Between the user end and the network end, the RRC layer exchanges RRC Messages, also known as signaling, through RRC procedures. RRC Messages are formed from many Information Elements (IE) used for embedding necessary information for setting, changing, or releasing protocol entities of Layer 2 (RLC, MAC) and Layer 1 (Physical Layer), thereby establishing, adjusting, or canceling information exchange channels to perform data packet transportation.

According to the RRC protocol specification developed by the 3rd Generation Partnership Project (3GPP), the RRC procedures include a cell update procedure, which is initiated by the UE in response to certain events in UE e.g. uplink data transmission, paging response, or cell reselection. The RRC message exchange in the cell update procedure includes a CELL UPDATE message transmitted from the UE to the UTRAN, and a CELL UPDATE CONFIRM message transmitted from the UTRAN to the UE. According to content of the CELL UPDATE CONFIRM message, the UE performs radio bearer reconfiguration or release, mobile information update, or transport channel reconfiguration, etc.

During the cell update procedure, the UTRAN can utilize a queuing operation to queue the UE when the current serving frequency carrier is congested. Under the queuing operation, the UE is directed to another carrier for a certain time and then re-initiates the cell update procedure. The related detailed operation is described as follows. After the UE transmits the CELL UPDATE message due to the initiation of the cell update procedure, the UTRAN includes a "Frequency info" IE and a "wait time" IE in the CELL UPDATE CONFIRM message in response to the CELL UPDATE message for indicating the UE to perform the queuing operation. Furthermore, the CELL UPDATE CONFIRM message further includes an "RRC indicator" IE for indicating the RRC state the UE shall enter, where the RRC state can be a CELL_PCH, URA_PCH, CELL_FACH, or CELL_DCH state.

When the "RRC indicator" indicates the CELL_PCH or URA_PCH state and the CELL UPDATE CONFIRM message also includes the "wait time" IE, the UE in CELL_PCH state selects a serving cell on the new carrier, whereas the UE in the URA_PCH state selects a cell belonging to the dedicated URA. After the cell selection, the UE waits at least the time given by the "wait time" IE, and then reinitiates the cell update procedure.

During the waiting state, the UE neither selects a control channel for receiving paging message according to system information on the selected serving cell nor determines a cycle period of a discontinuous reception (DRX) function according to IEs of the CELL UPDATE CONFIRM message. Meanwhile, those actions correspond to activation of the paging reception used for provision of a terminated call service in UE. As a result, the UE cannot receive paging messages after entering the CELL_PCH or URA_PCH state. That is, the UE cannot receive the terminated call service during the waiting state. The maximum waiting time in the "wait time" IE reaches 15 seconds, possibly causing a terminated call miss at the UE.

This in mind, the present invention aims at providing a method and related apparatus for introducing paging reception into a queuing operation for a UE entering a paging state in a wireless communications system.

This is achieved by a method and apparatus of improving queuing operation for a user equipment in a wireless communications system according to the pre-characterizing clauses of claims 1 and 7. The dependent claims pertain to corresponding further developments and improvements.

As will be seen more clearly from the detailed description following below, the claimed method of introducing paging reception into a queuing operation for a UE of a wireless communications system is disclosed. The method includes performing activating operations corresponding to the paging reception when entering a paging state corresponding to radio resource control and a waiting state of the queuing operation according to a cell update procedure.

In the following, the invention is further illustrated by way of example, taking reference to the accompanying drawings. Thereof
FIG .1 is a schematic diagram of a wireless communications system.
FIG. 2 is a functional block diagram of a communications device.
FIG. 3 is a diagram of the program code shown in FIG. 2.
FIG. 4 is a flowchart diagram of a process according to an embodiment of the present invention.

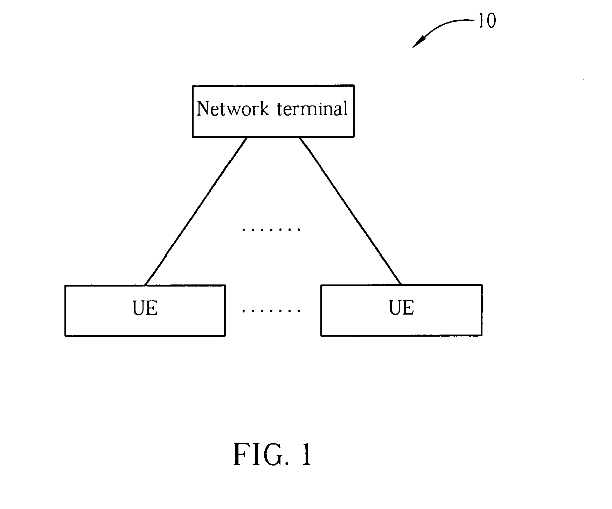

Please refer to FIG. 1, which is a schematic diagram of a wireless communications system 10. The wireless communications system 10 is preferred to be a third generation (3G) mobile communications system, and is briefly formed with a network terminal and a plurality of user equipments. In FIG. 1, the network terminal and the user equipments are simply utilized for illustrating the structure of the wireless communications system 10. Practically, the network terminal may include a plurality of base stations, radio network controllers, and so on according to actual demands, and the user equipments (UEs) can be apparatuses such as mobile phones, computer systems, etc.

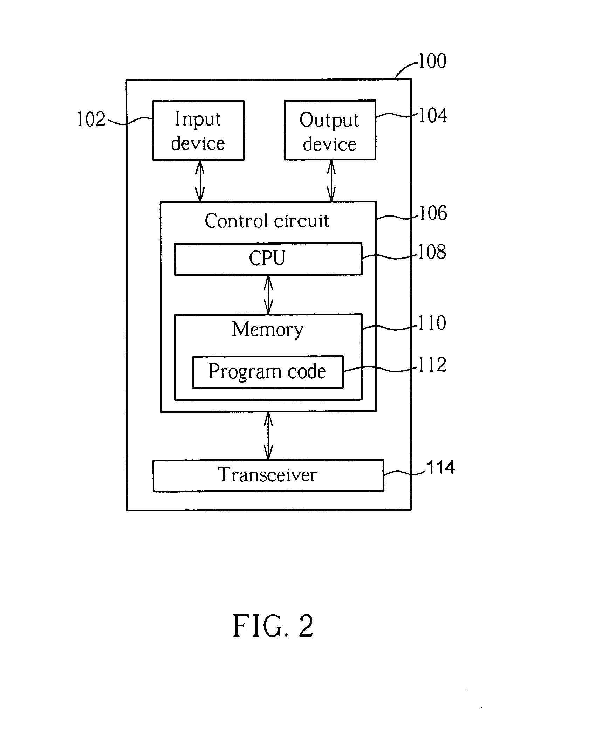

Please refer to FIG. 2, which is a functional block diagram of a communications device 100. The communications device 100 can be utilized for realizing the UEs in FIG .1. For the sake of brevity, FIG. 2 only shows an input device 102, an output device 104, a control circuit 106, a central processing unit (CPU) 108, a memory 110, a program code 112, and a transceiver 114 of the communications device 100. In the communications device 100, the control circuit 106 executes the program code 112 in the memory 110 through the CPU 108, thereby controlling an operation of the communications device 100. The communications device 100 can receive signals input by a user through the input device 102, such as a keyboard, and can output images and sounds through the output device 104, such as a monitor or speakers. The transceiver 114 is used to receive and transmit wireless signals, delivering received signals to the control circuit 106, and outputting signals generated by the control circuit 106 wirelessly. From a perspective of a communications protocol framework, the transceiver 114 can be seen as a portion of Layer 1, and the control circuit 106 can be utilized to realize functions of Layer 2 and Layer 3.

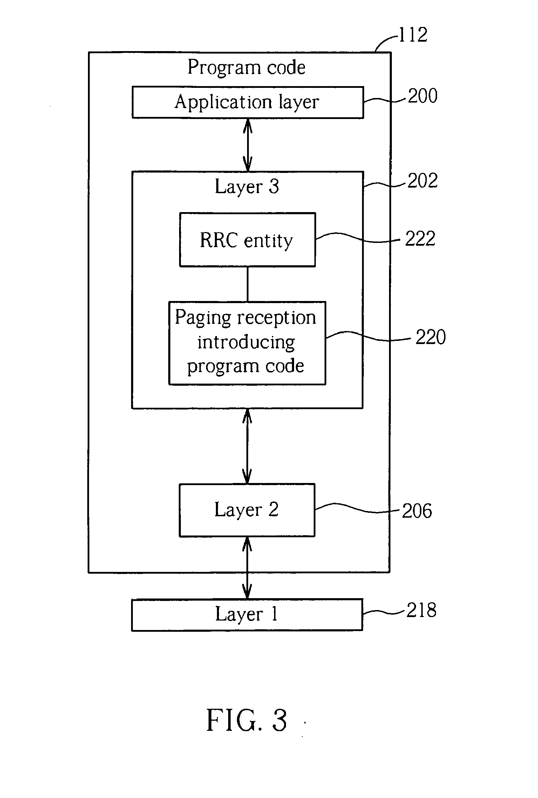

Please continue to refer to FIG. 3. FIG. 3 is a diagram of the program code 112 shown in FIG. 2. The program code 112 includes an application layer 200, a Layer 3 202, and a Layer 2 206, and is coupled to a Layer 1 218. The Layer 3 202 includes a radio resource control (RRC) entity 222 for controlling the Layer 1 218 and the Layer 2 206 with RRC messages and information elements (IEs) and thereby exchanging signaling with the network terminal of the wireless communications system 10 through RRC procedures. Furthermore, according to signaling from the network terminal, the RRC entity 222 can change an RRC state of the communications device 100, switching among an Idle mode, a CELL_PCH, a URA_PCH, a CELL_FACH or a CELL_DCH state: The CELL_PCH and URA_PCH states are a paging state where the communications device 100 can receive a terminated call corresponding to paging reception.

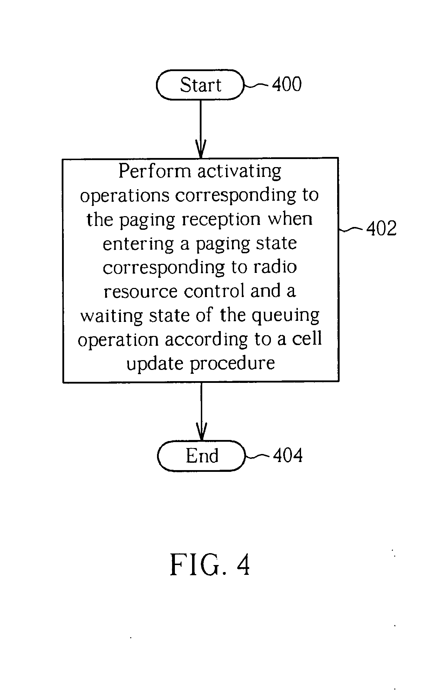

When the communications device 100 initiates a cell update procedure to request the network terminal for updating signaling parameters and configuration, the network terminal queues the communications device 100 through the cell update procedure. In this situation, the embodiment of the present invention provides paging reception introducing program code 220 to avoid missing a terminated call. Please refer to FIG. 4, which illustrates a schematic diagram of a process 40 according to an embodiment of the present invention. The process 40 is utilized for introducing paging reception into a queuing operation for a UE of the wireless communications system 10, and can be compiled into the paging reception introducing program code 220. The process 40 includes the following steps:
Step 400: Start.
Step 402: Perform activating operations corresponding to the paging reception when entering a paging state corresponding to radio resource control and a waiting state of the queuing operation according to a cell update procedure.
Step 404: End.

According to the process 40, the present invention specifies the UE, which enters both the paging and waiting states according to the cell update procedure, performs the activating operations corresponding to the paging reception so as to activate a terminated call paging service.

For example, the UE initiates the cell update procedure by sending a CELL UPDATE message to request the network terminal for updating the signaling parameters and configuration. In response to the CELL UPDATE message, the network terminal includes "Frequency info", "wait time", and "RRC indicator" IEs in a CELL UPDATE CONFIRM message. According to the process 40, the UE selects a serving cell according to the "Frequency info" IE, enters the waiting state according to the "wait time", and enters the CELL_PCH or URA_PCH state according to the "RRC indicator" IE. Then, the UE performs the activating operations including selecting a control channel for paging message reception according to system information broadcasted by the selected serving cell, and determining a cycle period of a discontinuous reception function according to IEs of the CELL UPDATE CONFIRM message. Preferably, the control channel is a Secondary Common Control Physical Channel (Secondary CCPCH) or a High-Speed Physical Downlink Share Channel (HS-PDSCH), and the cycle period of the discontinuous reception function is determined according to a "UTRAN DRX cycle length coefficient" IE.

In conclusion, the embodiment of the present invention allows the UE entering the CELL_PCH or URA_PCH state to perform the paging reception during the waiting state to avoid missing a terminated call and therefore continuity of a terminated call paging service is maintained.

## Claims

1. A method of introducing paging reception into a queuing operation for a user equipment of a wireless communications system, **characterized by** the method comprising:
performing activating operations corresponding to the paging reception when entering a paging state corresponding to radio resource control and a waiting state of the queuing operation according to a cell update procedure (402).

2. The method of claim 1, **characterized in that** entering the paging state corresponding to the radio resource control and the waiting state of the queuing operation according to the cell update procedure comprises:
selecting a serving cell according to a "Frequency info" information element; entering the paging state corresponding to the radio resource control according to an "RRC indicator" information element of a CELL UPDATE CONFIRM message of the cell update procedure; and
entering the waiting state of the queuing operation according to a "wait time" information element of the CELL UPDATE CONFIRM message.

3. The method of claim 1, **characterized in that** the paging state corresponding to the radio resource control is a CELL_PCH state or a URA_PCH state.

4. The method of claim 1, **characterized in that** the activating operations corresponding to the paging reception comprises:
selecting a control channel for paging message reception according to system information broadcasted by a serving cell of the user equipment; and
determining a cycle period of a discontinuous reception function according to information elements of a CELL UPDATE CONFIRM message of the cell update procedure.

5. The method of claim 4, **characterized in that** the control channel is a secondary common control physical channel or a high-speed physical downlink share channel.

6. The method of claim 4, **characterized in that** the cycle period of the discontinuous reception function is determined according to a "UTRAN DRX cycle length coefficient" information element.

7. A communications device (100) used in a wireless communications system for introducing paging reception into a queuing operation to maintain continuity of a terminated call paging service, the communications device (100) comprising:
a control circuit (106) for realizing functions of the communications device (100);
a central processing unit (108) installed in the control circuit (106) for executing a program code (112) to operate the control circuit (106); and
a memory (110) coupled to the central processing unit (108) for storing the program code (112);
**characterized in that** the program code (112) comprises: performing activating operations corresponding to the paging reception when entering a paging state corresponding to radio resource control and a waiting state of the queuing operation according to a cell update procedure (402).

8. The communications device (100) of claim 7, **characterized in that** entering the paging state corresponding to the radio resource control and the waiting state of the queuing operation according to the cell update procedure comprises:
selecting a serving cell according to a "Frequency info" information element; entering the paging state corresponding to the radio resource control according to an "RRC indicator" information element of a CELL UPDATE CONFIRM message of the cell update procedure; and
entering the waiting state of the queuing operation according to a "wait time" information element of the CELL UPDATE CONFIRM message.

9. The communications device (100) of claim 7, **characterized in that** the paging state corresponding to the radio resource control is a CELL_PCH state or a URA_PCH state.

10. The communications device (100) of claim 7, **characterized in that** the activating operations corresponding to the paging reception comprises:
selecting a control channel for paging message reception according to system information broadcasted by a serving cell of the user equipment; and
determining a cycle period of a discontinuous reception function according to information elements of a CELL UPDATE CONFIRM message of the cell update procedure.

11. The communications device (100) of claim 10, wherein the control channel is a secondary common control physical channel or a high-speed physical downlink share channel.

12. The communications device (100) of claim 10, wherein the cycle period of the discontinuous reception function is determined according to a "UTRAN DRX cycle length coefficient" information element.
